# EUROPEAN PATENT SPECIFICATION

(11) **EP 1 814 253 B1**
(45) Date of publication and mention of the grant of the patent: **01.10.2008**
(21) Application number: 06250518.5
(22) Date of filing: 31.01.2006
(51) Int. Cl.: H04L 1/18

(54) **Method and apparatus for transmission of communication response in a slotted radio data communication system**
Verfahren und System zur Übertragung einer Kommunikationsantwort in einem Schlitzdatenfunkübertragungssystem
Procédé et dispositif de transmission d'une réponse de communication dans un système de transmission de données radio à créneaux

(43) Date of publication of application: 01.08.2007
(73) Proprietor: Research In Motion Limited, Waterloo, Ontario N2L 3W8 (CA)
(72) Inventor: Wandel, Matthias, Waterloo, Ontario N2L 1S3 (CA); Pecen, Mark, Waterloo, Ontario N2L 5P3 (CA)
(74) Representative: Hibbert, Juliet Jane Grace

(56) References cited:
- EP-A- 0 905 923
- US-A- 4 646 082
- SU S-L ET AL: "PERFORMANCE COMPARISON OF ACKNOWLEDGEMENT PROTOCOLS FOR MULTIHOP CODE DIVISION MULTIPLE ACCESS NETWORKS" INTEGRATING THE WORLD THROUGH COMMUNICATIONS. TORONTO, JUNE 22 - 25, 1986, INTERNATIONAL CONFERENCE ON COMMUNICATIONS, NEW YORK, IEEE, US, vol. VOL. 3, June 1986 (1986-06), pages 1833-1838, XP000809670

## Description

The present invention relates generally to a manner by which to communicate communication responses, such as control acknowledgments or traffic data, in a slotted communication scheme, such as a GSM cellular communication system that provides for GPRS or EDGE data services. More particularly, the present invention relates to apparatus, and an associated method, for a mobile, or other, communication station that permits the communication station to transmit control acknowledgments, or other data transmissions, while also engaging in reception of data during multiple successive time slots.

### Background of the Invention

Advancements in communication technologies have permitted the construction of radio communication systems that provide for data communication services that require for their performance the ability to communicate large amounts of data in short periods of time. The throughput capacity of a communication system quantifies the rate at which data can be communicated between a set of communication stations. Generally, at higher data throughput rates, a communication service that requires communication of data of a given data size can be completed more quickly than when the data is communicated at a lower throughput rate.

A cellular communication system is exemplary of a radio communication system that increasingly is used by which to perform data communication services. While early-generation cellular communication systems were primarily used for voice communication services, successor-generation, cellular communication systems have provided for successively greater data services. A GSM (Global System for Mobile communications) cellular communication system, operable in conformity with the protocols and specifications of a series of operating standards promulgated by the EIA/TIA, is exemplary of a cellular communication system that provides for data communication services. Network infrastructures of GSM cellular communication systems have been widely deployed, permitting large numbers of users to communicate by way of a GSM network. Some GSM systems provide for GPRS (General Packet Radio Service), a high-speed data communication service. A super set of GPRS, referred to as EDGE (Enhanced Data for GSM Evolution), also defines a high-speed data communication service. EDGE communications, in general, add eight-PSK modulation, incremental redundancy, and adaptive modulation and coding to GPRS communications. An EDGE-capable communication system, as a result, provides for achievable data throughput rates that are significantly higher than those achievable in a GPRS-only system. GPRS and EDGE data communications provide efficient usage of radio and network resources to effectuate data communication services that are packet based, intermittent and non-periodic, and either frequent, with small transfers of data, or infrequent, with large transfers of data. Internet browsing and electronic mail messaging are two exemplary communication services carried out by way of a GSM/GPRS/EDGE network. Other digital cellular communication systems analogously also provide for data communication services.

The operating protocols set forth in the standard promulgations relating to GSM/GPRS/EDGE communications define various requirements with respect to the communication stations between which the data is communicated. For instance, specification number TS 45.008[5] sets forth adjacent-cell measurement requirements. And, document TS 45.0002[2], Annex B, sets forth required communication-station reaction times. Multi-slot classes are also defined in the standard promulgation.

A possible multi-slot communication allocation provides for the possibility of communication allocations. That is to say, allocations can be made over a plurality of time slots, even the entirety of the time slots of one or more frames. While permitted, this multi-slot communication possibility is precluded in actual practice. Reporting and acknowledgment requirements, set forth in the aforementioned operating protocols, necessitate that a receiving communication station be able to generate and send acknowledgments or reports during one or more time slots of a frame or group of frames. The need to provide for a time slot for reporting or acknowledgment messages, if only during a single time slot of a group of frames, prevents an allocation of all of the time slots for the data communications.

IEEE Conference document by Szu-Lin Su et al "Performance Comparison of Acknowledgment Protocols for Multihop Code Division Multiple Access Networks" Integrating the World Through Communications, Toronto, June 22-25, 1986, International Conference on Communications, New York, IEEE, US, Vol. 3, June 1986 (1986-06), pages 1833-1838, discloses acknowledgment protocols wherein acknowledgment messages are sent following a successful data packet transmission.

US Patent No. 4646082 describes a data message communication system in which certain messages require a return acknowledgement signal and relates to a method and means which are activated whenever an outbound message is received. Each portable unit which receives a message then monitors the outbound communication channel to determine if the inhibit signal is currently active. If the inhibit is not currently active, the particular unit will transmit its acknowledgement message immediately. If the inhibit signal is active, each portable unit will maintain a count of the number of outbound messages, addressed to other units requiring an acknowledgement, since that particular portable received its message. At the termination of the inhibit signal, each portable unit will pause for a period equivalent to the product of the acknowledgement message time slot multiplied by count of messages accumulated since the receipt of the particular portable units message. Each portable unit will then transmit an acknowledgement signal at the termination of its unique pause period.

If a manner could be provided by which to permit the multi-slot communication allocations while still providing a mechanism for a communication station to return communication acknowledgments or reports, improved communication performance in a time-slotted communication system would be provided.

It is in light of this background information related to communications in a slotted radio data communication system that the significant improvements of the present invention have evolved.

### Brief Description of the Drawings

Figure 1 illustrates a functional block diagram of a communication system in which an embodiment of the present invention is operable.

Figure 2 illustrates a graphical representation of exemplary utilization of the slotted radio air interface pursuant to exemplary operation of an embodiment of the present invention.

Figure 3 illustrates a method flow diagram listing the method of operation of an embodiment of the present invention.

### Detailed Description

The present invention, accordingly, advantageously provides apparatus, and an associated method, by which to communicate communication responses, such as communication acknowledgments or traffic data, in a slotted communication scheme, such as a GSM communication scheme that provides for GPRS or EDGE data services.

Through operation of an embodiment of the present invention, a manner is provided for a mobile, or other, communication station that permits the communication station to transmit control acknowledgments, or other data transmissions, while also engaging in reception of data during multiple successive time slots.

Communication reception is intermittently paused while the communication station transmits the control acknowledgment or other data. The pause in the reception is great enough at least to permit the communication station to change its operational mode to permit the transmission of the acknowledgment or other data, to perform the transmission, and to return operation to a mode to continue receiving the communication data.

Autonomous selection by the communication station is made to send the control acknowledgment or other data, and, responsive to such decision, a receive part is turned off, or its operation otherwise paused, while preparations are made to transmit the control acknowledgment or other data, on a selected one or more time slots.

By providing the capability to the communication station, the communication station is permitted to be operable in additional multi-slot combinations of communication allocations, particularly, allocations in which entire frames, *viz*., all of the time slots of one or more frames, are allocated for communication of data to a communication station.

When implemented in a mobile station, implicit support for control acknowledgment transmissions on a communication uplink on one or more time slots at selected intervals, such as a time slot selected during every certain number of downlink allocated blocks, is provided. The mobile station observes conformance to reaction time requirements to change the mode of the mobile station to permit its communication of the control acknowledgment or other data transmission at selected intervals while otherwise operating to receive downlink data communicated to the mobile station during multiple successive time slots encompassing entire time frames.

In another aspect of the present invention, the other data transmission comprises an uplink TBF (Temporary Block Flow). The uplink TBF is provided while a multiple successive downlink time slot allocation is active. During a period in which the mobile station is to send data, the mobile station reduces its downlink allocation to accommodate the uplink data transmission. When the uplink transmission is completed, the mobile station reverts its operation again to receive downlink data during all of the time slots of the multiple successive time slots.

When implemented in a GSM system that provides for GPRS, or its superset EDGE, data communication services, communication is provided with one or more mobile stations. Pursuant to registration of a mobile station, the mobile station informs the network part of the communication system of the capability of the mobile station to operate in an implicit mode, that is, a mode in which the mobile station pauses its reception operations at selected intervals and for selected time periods at the selected intervals, sends control acknowledgments, or other data, to the network part. The mobile station informs the network part of its capabilities, for instance, in a Classmark message. The message includes a field, or fields, to inform the network part of the capabilities of the mobile station to operate in this mode.

In response to registration and election to perform a communication service, the mobile station is allocated a specific set of radio resources for the reception of downlink information sent to the mobile station by the network part of the communication system. The downlink radio resources that are assigned to the mobile station include a radio frequency and an integral number of time slots, *viz*., a number of multiple successive time slots. The mobile station receives and decodes information communicated and received on all of the allocated downlink time slots during a portion of the reception of the downlink data traffic. The mobile station switches to a mode in which the mobile station receives and decodes the information on only a subset of the downlink time slots and during another subset of the period, the mobile station operates to transmit a control acknowledgment or other data traffic on an uplink to the network part of the communication system. Switching between the modes of operation by the mobile station is carried out alternately autonomously or in response to a message sent by the network, such as an uplink state flag.

Thereby, the mobile station is able to be operated to receive data allocated during multiple successive time slots, such as all of the time slots of a set of time frames while also permitting the mobile station to provide control acknowledgments or send other data to the network.

In these and other aspects, therefore, apparatus, and an associated method, is provided for facilitating communication response by a first communication station that receives communication data communicated upon time slots defined pursuant to a time-slotted communication scheme. A controller is adapted to receive an indication of when the communication response is to be sent by the first communication station. The controller is configured selectably to generate a receive pause control signal used to pause receive operation of the communication station during at least a first selected time slot period. A communication response generator is configured to generate the communication response, available for communication by the first communication station during the at least the first selected time slot period identified in the receive pause control signal generated by the controller.

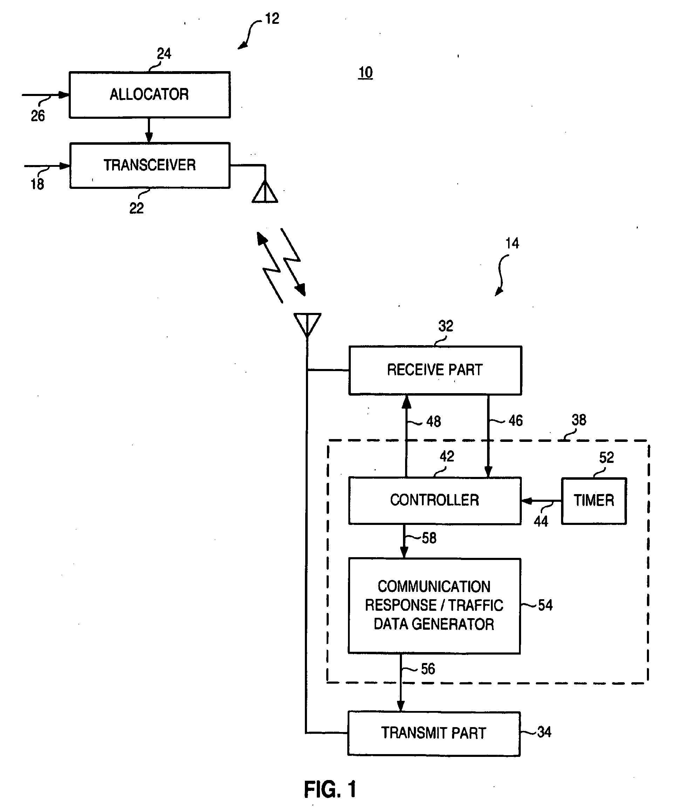

With these and other aspects in mind, therefore, reference is first made to Figure 1. A communication system, shown generally at 10, provides for the communication of data between communication stations by way of a radio air interface. The communication of the data is carried out pursuant to operation of an embodiment of the present invention. In the exemplary implementation, the communication system 10 operates in general conformity with the operating protocols of a GSM/GPRS/EDGE (Global System for Mobile communications/General Packet Radio Service/Enhanced Data for GSM Evolution) communication system as set forth in the operating standards relating thereto promulgated by the EIA/TIA. While the following description shall describe exemplary operation of the communication system with respect to its exemplary implementation in which GPRS or EDGE data services are provided, the teachings of the present invention are analogously also applicable to other types of communication systems, e.g., other communication systems that make use of a slotted communication scheme.

Elements of the communication system 10 shown in Figure 1 include a set of communication stations, here communication stations 12 and 14. The communication station 12 is representative of a network station forming part of the network infrastructure of the communication system. And, the communication station 14 is representative of a mobile station. The communication stations 12 and 14 shall, at times, be referred to herein as a network station and a mobile station, respectively. During operation of the communication system, data is communicated, such as pursuant to performance of a data communication service, between the network and mobile stations. Downlink communication of data, i.e., by the network station to the mobile station, as well as uplink communication of data, i.e., by the mobile station to the network station is carried out. For purposes of illustration, a downlink data communication service shall be described. An uplink communication service is analogous, and its performance is analogously carried out.

The network station is adapted to receive data, here represented by way of the line 18, that is to be communicated to the mobile station. The data provided by way of the line 18 is provided to a transmit part of a transceiver 22. The transmit part of the transceiver operates to place the data in a form to permit its communication to the mobile station and to transmit the data, once placed in the appropriate form.

The mobile station registers with the network station pursuant to registration procedures. Registration procedures are carried out, for instance, when the mobile station is powered-up and when the mobile station enters into an area encompassed by a network part of which the network station forms a portion. As part of the registration procedure, the mobile station sends a Classmark 2 or 3 message. The Classmark message is defined in the operating specification of the GSM/GPRS/EDGE, and pursuant to an embodiment of the present invention includes an extension that identifies the mobile station capability to send communication acknowledgments, or other data, at selected intervals and periods. The transceiver of the network station also includes a receive part that receives messages sent by the mobile station.

The network station also includes an allocator 24. The allocator allocates radio resources upon the radio air interface that extends between the network and mobile stations. The allocation is, in the exemplary implementation, made responsive to indications, here provided by way of the line 26, of the amount of data that is to be communicated. Other, or additional, indicia is alternately utilized by the allocator in the allocation of radio resources to provide for the communication of the data. The radio air interface of a GSM/GPRS/EDGE communication system forms a time-slotted communication scheme in which time frames are defined at various frequencies within the range of operation of the communication stations. Each time frame is divided into time slots, and time slot-radio frequency carrier combinations are allocable for the communication of the data. As mentioned previously, multiple sequential time slots are allocable upon a carrier to expedite the communication of data between the communication stations. While allocation of time slots that encompass an entire time frame, or groups of time frames, is permitted, the need to provide opportunity to a communication station, here the mobile station, that receives the data to acknowledge its receipt or otherwise respond, at selected intervals to the communication station that communicates the data, limits the multiple successive time slot allocations. A time period great enough to permit the communication of the communication acknowledgment and other response as well as time periods to change the mode of operation of the mobile station into and out of the acknowledgment or response node is required. As a result, existing allocations made by conventional allocators 24 do not allocate the multiple successive time slots of a number that would prevent the generation and return of the communication acknowledgment or other response. Pursuant to an embodiment of the present invention, more expansive, multiple successive time slot allocations are permitted to be made when the mobile station is identified to be capable of implicit mode operation, thereby to facilitate timely communication of data to perform a data communication service.

Allocations made by the allocator are provided to the transceiver, and the operations of the transceiver to transmit the data provided by way of the line 18 for communication to the mobile station is carried out using the resources allocated by the allocator.

The mobile station 14 also includes a transceiver, here represented by a receive part 32 and a transmit part 34. The receive part operates to receive the data communicated thereto and perform conventional receive operations upon the received data to recreate the informational content thereof.

The mobile station also includes apparatus, shown generally at 38, of an embodiment of the present invention. The apparatus 38 is functionally represented, implementable in any desired manner, including, for instance, by algorithms executable by processing circuitry. The apparatus 38 facilitates operation of the mobile station to transmit control acknowledgments, or other communication responses, while engaging in a downlink data transfer of GPRS or EDGE-formatted data pursuant to a data communication service. By its operation, the apparatus 38 permits operation of the communication system to communicate data upon multiple successive time slots, including the time slots of entire time frames, thereby to most expeditiously perform a data communication service. The apparatus 38 also operates, during mobile-station registration, to form the Classmark 2 or 3 message that informs the network station of mobile-station capability in an implicit mode.

The apparatus 38 includes a controller 42 that is provided with input indicia on the lines 44 and 46 and, responsive to the indicia, selectably generates a pause control signal on the line 48 for application to the receive part 32. The indicia provided on the line 44 is here provided by a timer 52. The timer is synchronized to the timing scheme of the communication system and provides an indication to the controller by way of the line 44 at selected intervals to indicate that a control acknowledgment or other communication response is to be generated and communicated by the mobile station pursuant to the performance of the data communication service. The indicia provided to the controller by way of the line 46 is here representative of indicia identifying when communication data communicated pursuant to the data communication service is received at the receive part, at least to indicate when the communication data is received during at least a selected number of sequential time slots. The pause control signal caused by the controller to be applied to the receive part 32 pauses operation of the receive part to pause its operation to receive data for a selected period, such as a time slot or group of time slots. The pausing of reception, and transmission by the mobile station, and corresponding operation of the network station to not transmit data is carried out implicitly without need for additional signaling subsequent to registration and transmission of the Classmark 2 or 3 message by the mobile station.

The apparatus further includes a communication response and traffic data generator 54 that is selectably operable to generate a communication acknowledgment or response or traffic data that is provided by way of the line 56 to the transmit part 34 for transmission therefrom. In the exemplary implementation, the operation of the generator 54 is in synchronicity with the generation by the controller of the pause control signal, either in a concurrent or timed relationship. Synchronicity is here represented by the line 58 that extends between the controller 42 and the generator 54. And, the receive and transmit parts are synchronized such that the pause control signal causes pausing of the operation of the receive part for a time period that corresponds with the time period during which the transmit part operates to transmit the communication acknowledgment, response, or traffic data. As reaction time periods, such as those set forth in the GPRS-EDGE specification TS 45.0002[2], Annex B, are also taken into account, the time period during which the receive part is not operated to receive and operation upon received data is correspondingly lengthened.

As the operation of the receive part of the mobile station is caused to be paused and the transmit part of the mobile station is caused to transmit during selected periods, such as during a single time slot of a group of time frames, multiple sequential time slot allocations for communication of data to the mobile station can be made, and communication data communicated pursuant to the performance of the data communication service while also providing a mechanism by which to generate communication acknowledgments or responses or to generate traffic data, also pursuant to effectuation of the data communication service.

Allocations made by the allocator 24 are made implicitly in conjunction with the operation of the apparatus 38 embodied at the mobile station such that data is not communicated by the network station to the mobile station during the periods in which the operation of the receive part 32 of the mobile station is paused. Data is not sent by the network station when the mobile station is not operated to receive the communicated data, and the network station is alerted to be operable to detect the communication acknowledgment or other response generated and transmitted by the mobile station.

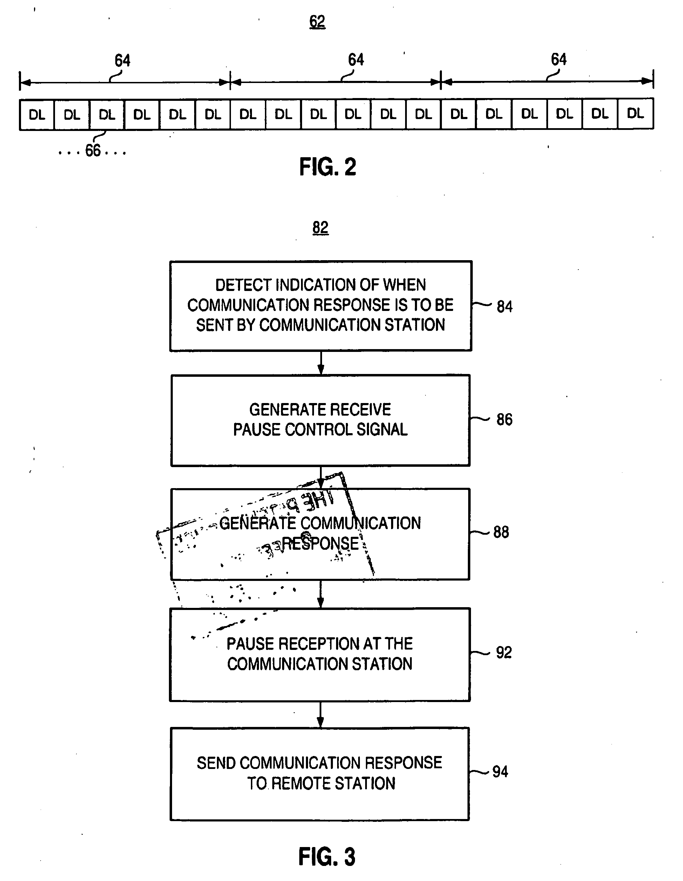

Figure 2 illustrates a representation, shown generally at 62, representative of exemplary communication allocations over a plurality of time slots encompassing a group of frames. Here, six frames 64, each formed of six time slots 66, are shown. Time slots that are allocated for downlink communications are designated with the letters "DL". And, time slots that are used to return communication acknowledgments are designated with the letters "UL". In this exemplary representation, multiple successive time slots are allocated for downlink communications of the data. And, more particularly, multiple sequential time slots encompassing entire time frames 64 are allocated for the downlink communications. Only intermittently, here, during a time slot of alternating time frames, is there an allocation for return of a communication acknowledgment or other response. Thereby, increased amounts of radio resources are allocable for the communication of the data to the mobile station.

Also pursuant to operation of a further embodiment of the present invention, an uplink state flag (USF) is sent by the network part to the mobile station. When received at the mobile station, the uplink state flag, or its absence, is determinative, at the mobile station, as to whether the mobile station sends data back to the network station on uplink-designated time slots. If the network station elects not to send a USF, the mobile station operates solely in a receive mode to receive downlink data communicated upon the allocated downlink channels. If, conversely, the network station sends an USF to the mobile station, the mobile station is granted the opportunity to transmit data, such as in the next or subsequent block period. And, subsequent to the transmission by the mobile station, in conformity with the instructions of the USF, the mobile station returns to the receive mode to receive downlink communication data during the next subsequent block period.

With respect to the exemplary implementation in a GSM/GPRS/EDGE communication system, an embodiment of the present invention provides the capability of an amended TS[4] 44.060 standard promulgation to permit implicit support for control acknowledgments (Ctl-Ack) on an uplink every certain number of downlink blocks, by reducing the downlink assignment from six or more to a number less than six, thereby enabling a mobile station to observe conformance to reaction time requirements set forth in the existing promulgation of document number TS 45.002[2] whenever the mobile station requires the transmission of an uplink control acknowledgment. For instance, a DL TBF is sent, responsive to assignment, i.e., allocation, of time slots TSO...TS6 for twelve block periods. And, then, for one block period, the DL assignment is temporarily changed to, e.g., TSO...TS3, while the control acknowledgment is sent on the uplink. The assignment, i.e., allocation, thereafter reverts to TSO...TS6 for another twelve block period.

Figure 3 illustrates a method, shown generally at 82, representative of the method of operation of an embodiment of the present invention. The method facilitates communication response by a first communication station that receives communication data communicated upon time slots defined pursuant to a time slotted communication scheme. First, and as indicated by the block 84, an indication of when the communication response is to be sent by the first communication station is detected. In one implementation, additional detections are made, such as detections of an indication of when the communication data received by the first communication station is communicated by more than a selected number of successive time slots.

Then, and as indicated by the block 86, a receive pause control signal is selectably generated. The receive pause control signal is used to pause receive operation of the first communication station during at least a first selected time slot period.

Then, and as indicated by the block 88, a communication response is generated. The communication response is available for communication by the first communication station during the at least the first selected time slot period.

Thereafter, and as indicated by the block 92, reception is paused at the first communication station during the first time slot period identified in the receive pause control signal. And, as indicated by the block 94, the communication response is sent to a remote station.

Thereby, through operation of an embodiment of the present invention, a manner is provided by which to permit multiple successive time slots, such as those encompassing entire time frames, to be made and used upon which to communicate data to perform a data communication service. Receive operations at a receiving station are paused at selected intervals to permit the receiving communication station to generate and transmit communication acknowledgments or other responses.

The previous descriptions are of preferred examples for implementing the invention, and the scope of the invention should not necessarily be limited by this description. The scope of the present invention is defined by the following claims.

## Claims

1. Apparatus (38) for facilitating communication response by a first communication station (14) that receives communication data communicated upon multiple successive time slots (66) defined pursuant to a time slotted communication scheme, wherein the communication of data to the first communication station (14) upon said time slots is paused at selected intervals and for a selected time period that is equal to a time slot or group of time slots, and wherein the communication response comprises a communication acknowledgement from the first communication station (14) that acknowledges receipt of the communication data received at the first communication station (14), said apparatus (38) comprising:
a timer (52) adapted to provide an indication of when the communication response is to be sent by the first communication station (14), said timer being synchronized to when the said communication of data upon said time slots is paused in order to synchronize said indication of when the communication response is to be sent, to when said communication of data is paused;
a controller (42) adapted to receive, from said timer, the indication of when the communication response is to be sent by the first communication station (14), said controller (42) configured to generate a receive pause control signal used to pause the receive operation of the first communication station (14) during at least a first selected time slot period; and
a communication response generator (54) configured to generate the communication response, available for communication by the first communication station (14) during the at least first selected time slot period identified in the receive pause control signal generated by said controller (42).

2. The apparatus (38) of claim 1 wherein said controller (42) is further adapted to receive an indication of when the communication data received by the first communication station (14) is communicated during more than a selected number of successive time slots (66), and wherein generation of the receive pause control signal is responsive, in part, to the indication of communication of the communication data during the more than the selected number of the successive time slots (66).

3. The apparatus (38) of claim 2 wherein the time slotted communication scheme defines frames (64), each frame (64) formed of a group of time slots (66), and wherein the selected number of successive time slots (66) comprises a plurality of time slots (66) forming at least a frame (64) of time slots (66).

4. The apparatus (38) of claim 2 wherein the at least the first selected time slot period identified in the receive pause controls signal comprises at least one time slot (66) of the successive time slots during which the communication data received by the first communication station (14) is communicated.

5. The apparatus (38) of claim 1 wherein said communication response generator (54) comprises a communication acknowledgment generator.

6. The apparatus (38) of claim 1 wherein the communication response comprises traffic data and wherein said communication response generator (54) comprises a traffic data generator.

7. The apparatus (38) of claim 1 wherein the first communication station (14) comprises a receiver (32) and wherein the receive pause control signal generated by said controller (42) is applied to the receiver (32) to pause receive operation thereof during the first selected time slot period.

8. The apparatus (38) of claim 1 wherein the first communication station (14) comprises a transmitter (34) and wherein the communication response generated by said communication response generator (54) is applied to the transmitter (34) for communication therefrom.

9. The apparatus (38) of claim 1 wherein the at least the first selected time slot period comprises a duration lengthy enough to permit the first communication station (14) to change operation thereof to permit communication of the communication response, to communicate the communication response, and to return operation thereof to receive the communication data.

10. The apparatus (38) of claim 1 wherein the communication response comprises traffic data, wherein said communication response generator (54) is further adapted to receive a state flag indication, said communication response generator (54) configured to generate the communication response comprising the traffic data when the state flag indication is of a selected value.

11. The apparatus (38) of claim 1 wherein said controller (42) and said communication response generator together operate autonomously.

12. The apparatus (38) of claim 1 wherein the time slotted communication scheme comprises a Global System for Mobile communication, hereafter referred to as GSM communication system that provides for high-speed data services, wherein the communication data received by the first communication station (14) comprises high-speed service data, and wherein the receive pause control signal generated by said controller (42) pauses operation of the first communication station to receive the high-speed service data.

13. A method (82) for facilitating communication response by a first communication station (14) that receives communication data communicated upon multiple successive time slots (66) defined pursuant to a time slotted communication scheme, wherein the communication of data to the first communication station (14) upon said time slots is paused at selected intervals and for a selected time period that is equal to a time slot or group of time slots, and wherein the communication response comprises a communication acknowledgement from the first communication station (14) that acknowledges receipt of the communication data received at the first communication station (14), said method (82) comprising the operation of:
providing an indication of when the communication response is to be sent by the first communication station (14), said indication of when the communication response is to be sent being synchronized to when the said communication of data upon said time slots is paused;
responsive to said indication, generating a receive pause control signal used to pause the receive operation of the first communication station (14) during at least a first selected time slot period; and
generating the communication response, available for communication by the first communication station (14) during the at least first selected time slot period identified in the receive pause control signal generated during said operation of selectably generating.

14. The method (82) of claim 13 further comprising the operation, prior to said operation of selectably generating, of detecting the indication of when the communication response is to be sent by the first communication station (14), and wherein generation of the receive pause control signal during said operation of selectably generating is responsive to detection of the indication.

15. The method (82) of claim 13 further comprising the operation of detecting an indication of when the communication data received by the first communication station (14) is communicated by more than a selected number of successive time slots, and wherein generation of the receive pause control signal during said operation of selectably generating is further responsive to the indication.

16. The method (82) of claim 15 wherein the at least the first selected time slot identified in the receive pause control signal generated during said operation of selectably generating comprises at least one time slot of the successive time-slots during which the communication data received by the first communication station (14) is communicated.

17. The method (82) of claim 13 wherein said operation of generating the communication response comprises generating the communication acknowledgment.

18. The method (82) of claim 13 wherein the communication response comprises traffic data and wherein said operation of generating the communication response comprises generating the traffic data.

19. The method (82) of claim 13 further comprising the operation of pausing reception at the first communication station (14) during the first time slot period identified in the receive pause control signal generated during said operation of selectably generating the receive pause control signal.

20. The method (82) of claim 19 further comprising the operation of sending the communication response generated during said operation of generating the communication response to a remote station.

21. The apparatus (38) of claim 1 wherein the first communication station (14) is adapted to pause its reception operations at selected intervals and, for selected time periods at the selected intervals, to send the communication response.

22. The method (82) of claim 13 further comprising pausing the reception operations of the first communication station (14) at selected intervals and, for selected time periods at the selected intervals, sending the communication response.

## Patentansprüche

1. Vorrichtung (38) zur Erleichterung einer Kommunikationsantwort durch eine erste Kommunikationsstation (14), die Kommunikationsdaten empfängt, die auf mehreren aufeinander folgenden Zeitschlitzen (66) kommuniziert werden, die definiert werden gemäß einem Zeitschlitz-Kommunikationsschema, wobei die Kommunikation von Daten an die erste Kommunikationsstation (14) auf den Zeitschlitzen angehalten wird an ausgewählten Intervallen und für eine gewählte Zeitdauer, die gleich ist zu einem Zeitschlitz oder einer Gruppe von Zeitschlitzen, und wobei die Kommunikationsantwort eine Kommunikationsbestätigung von der ersten Kommunikationsstation (14) aufweist, die einen Empfang der Kommunikationsdaten bestätigt, die von der ersten Kommunikationsstation (14) empfangen werden, wobei die Vorrichtung (38) aufweist:
einen Timer (52), der ausgebildet ist, eine Anzeige vorzusehen, wann die Kommunikationsantwort durch die erste Kommunikationsstation (14) zu senden ist, wobei der Timer synchronisiert ist damit, wann die Kommunikation von Daten auf den Zeitschlitzen angehalten wird, um die Anzeige, wann die Kommunikationsantwort zu senden ist, mit dem Zeitpunkt zu synchronisieren, wann die Kommunikation von Daten angehalten wird;
eine Steuervorrichtung (42), die ausgebildet ist, von dem Timer die Anzeige zu empfangen, wann die Kommunikationsantwort durch die erste Kommunikationsstation (14) zu senden ist, wobei die Steuervorrichtung (42) konfiguriert ist, ein Empfangspausesteuersignal zu erzeugen, das verwendet wird, um die Empfangsoperation der ersten Kommunikationsstation (14) während zumindest einer ersten gewählten Zeitschlitzdauer anzuhalten; und
einen Kommunikationsantwortgenerator (54), der konfiguriert ist, die Kommunikationsantwort zu erzeugen, verfügbar zur Kommunikation durch die erste Kommunikationsstation (14) während der zumindest ersten gewählten Zeitschlitzdauer, die in dem Empfangspausesteuersignal identifiziert wird, das durch die Steuervorrichtung (42) erzeugt wird.

2. Vorrichtung (38) gemäß Anspruch 1, wobei die Steuervorrichtung (42) weiter ausgebildet ist, eine Anzeige zu empfangen, wann die Kommunikationsdaten, die durch die erste Kommunikationsstation (14) empfangen werden, kommuniziert werden während mehr als einer gewählten Anzahl von aufeinander folgenden Zeitschlitzen (66), und wobei eine Erzeugung des Empfangspausesteuersignals zum Teil Reaktion ist auf die Anzeige einer Kommunikation der Kommunikationsdaten während der mehr als der gewählten Anzahl von aufeinander folgenden Zeitschlitzen (66).

3. Vorrichtung (38) gemäß Anspruch 2, wobei das Zeitschlitz-Kommunikationsschema Rahmen (64) definiert, wobei jeder Rahmen (64) gebildet wird aus einer Gruppe von Zeitschlitzen (66), und wobei die gewählte Anzahl von aufeinander folgenden Zeitschlitzen (66) eine Vielzahl von Zeitschlitzen (66) aufweist, die zumindest einen Rahmen (64) von Zeitschlitzen (66) bilden.

4. Vorrichtung (38) gemäß Anspruch 2, wobei die zumindest erste gewählte Zeitschlitzdauer, die in dem Empfangspausesteuersignal identifiziert wird, zumindest einen Zeitschlitz (66) der aufeinander folgenden Zeitschlitze aufweist, während dem die Kommunikationsdaten, die durch die erste Kommunikationsstation (14) empfangen werden, kommuniziert werden.

5. Vorrichtung (38) gemäß Anspruch 1, wobei der Kommunikationsantwortgenerator (54) einen Kommunikationsbestätigungsgenerator aufweist.

6. Vorrichtung (38) gemäß Anspruch 1, wobei die Kommunikationsantwort Verkehrsdaten aufweist und wobei der Kommunikationsantwortgenerator (54) einen Verkehrsdatengenerator aufweist.

7. Vorrichtung (38) gemäß Anspruch 1, wobei die erste Kommunikationsstation (14) einen Empfänger (32) aufweist und wobei das Empfangspausesteuersignal, das durch die Steuervorrichtung (42) erzeugt wird, auf den Empfänger (32) angewendet wird, um dessen Empfangsoperation anzuhalten während der ersten gewählten Zeitschlitzdauer.

8. Vorrichtung (38) gemäß Anspruch 1, wobei die erste Kommunikationsstation (14) einen Sender (34) aufweist und wobei die Kommunikationsantwort, die durch den Kommunikationsantwortgenerator (54) erzeugt wird, auf den Sender (34) angewendet wird zur Kommunikation von diesem.

9. Vorrichtung (38) gemäß Anspruch 1, wobei die zumindest erste gewählte Zeitschlitzdauer eine Dauer aufweist, die ausreichend lang ist, um zu ermöglichen, dass die erste Kommunikationsstation (14) ihre Operation ändert, um eine Kommunikation der Kommunikationsantwort zu ermöglichten, die Kommunikationsantwort zu kommunizieren und ihre Operation zurückzusetzen, um die Kommunikationsdaten zu empfangen.

10. Vorrichtung (38) gemäß Anspruch 1, wobei die Kommunikationsantwort Verkehrsdaten aufweist, wobei der Kommunikationsantwortgenerator (54) weiter ausgebildet ist, eine Zustands-Flag-Anzeige zu empfangen, wobei der Kommunikationsantwortgenerator (54) konfiguriert ist, die Kommunikationsantwort zu erzeugen, welche die Verkehrsdaten aufweist, wenn die Zustands-Flag-Anzeige einen gewählten Wert hat.

11. Vorrichtung (38) gemäß Anspruch 1, wobei die Steuervorrichtung (42) und der Kommunikationsantwortgenerator zusammen autonom arbeiten.

12. Vorrichtung (38) gemäß Anspruch 1, wobei das Zeitschlitz-Kommunikationsschema ein "Global System for Mobile Communications"-Kommunikationssystem, im Folgenden als GSM bezeichnet, aufweist, das Hochgeschwindigkeitsdatendienste vorsieht, wobei die Kommunikationsdaten, die durch die erste Kommunikationsstation (14) empfangen werden, Hochgeschwindigkeitsdienstdaten aufweisen, und wobei das Empfangspausesteuersignal, das durch die Steuervorrichtung (42) erzeugt wird, eine Operation der ersten Kommunikationsstation anhält, um die Hochgeschwindigkeitsdienstdaten zu empfangen.

13. Verfahren (82) zur Erleichterung einer Kommunikationsantwort durch eine erste Kommunikationsstation (14), die Kommunikationsdaten empfängt, die auf mehreren aufeinander folgenden Zeitschlitzen (66) kommuniziert werden, die definiert werden gemäß einem Zeitschlitz-Kommunikationsschema, wobei die Kommunikation von Daten an die erste Kommunikationsstation (14) auf den Zeitschlitzen angehalten wird an ausgewählten Intervallen und für eine gewählte Zeitdauer, die gleich ist zu einem Zeitschlitz oder einer Gruppe von Zeitschlitzen, und wobei die Kommunikationsantwort eine Kommunikationsbestätigung von der ersten Kommunikationsstation (14) aufweist, die einen Empfang der Kommunikationsdaten bestätigt, die an der ersten Kommunikationsstation (14) empfangen werden, wobei das Verfahren (82) die Operation aufweist:
Vorsehen einer Anzeige, wann die Kommunikationsantwort durch die erste Kommunikationsstation (14) zu senden ist, wobei die Anzeige, wann die Kommunikationsantwort zu senden ist, mit dem Zeitpunkt synchronisiert ist, wann die Kommunikation von Daten auf den Zeitschlitzen angehalten wird;
als Antwort auf die Anzeige, Erzeugen eines Empfangspausesteuersignal, das verwendet wird, um die Empfangsoperation der ersten Kommunikationsstation (14) während zumindest einer ersten gewählten Zeitschlitzdauer anzuhalten; und
Erzeugen der Kommunikationsantwort, verfügbar für eine Kommunikation durch die erste Kommunikationsstation (14) während der zumindest ersten gewählten Zeitschlitzdauer, die in dem Empfangspausesteuersignal identifiziert wird, das erzeugt wird während der Operation des wählbaren Erzeugens.

14. Verfahren (82) gemäß Anspruch 13, das weiter die Operation aufweist, vor der Operation des wählbaren Erzeugens, eines Erfassens der Anzeige, wann die Kommunikationsantwort durch die erste Kommunikationsstation (14) zu senden ist, und wobei ein Erzeugen des Empfangspausesteuersignals während der Operation des wählbaren Erzeugens reagierend ist auf eine Erfassung der Anzeige.

15. Verfahren (82) gemäß Anspruch 13, das weiter die Operation aufweist eines Erfassens einer Anzeige, wann die Kommunikationsdaten, die durch die erste Kommunikationsstation (14) empfangen werden, kommuniziert werden während mehr als einer gewählten Anzahl von aufeinander folgenden Zeitschlitzen, und wobei eine Erzeugung des Empfangspausesteuersignals während der Operation des wählbaren Erzeugens weiter reagierend ist auf die Anzeige.

16. Verfahren (82) gemäß Anspruch 15, wobei die zumindest erste gewählte Zeitschlitzdauer, die in dem Empfangspausesteuersignal identifiziert wird, das erzeugt wird während der Operation des wählbaren Erzeugens, zumindest einen Zeitschlitz der aufeinander folgenden Zeitschlitze aufweist, während dem die Kommunikationsdaten, die durch die erste Kommunikationsstation (14) empfangen werden, kommuniziert werden.

17. Verfahren (82) gemäß Anspruch 13, wobei die Operation eines Erzeugens der Kommunikationsantwort ein Erzeugen der Kommunikationsbestätigung aufweist.

18. Verfahren (82) gemäß Anspruch 13, wobei die Kommunikationsantwort Verkehrsdaten aufweist und wobei die Operation des Erzeugens der Kommunikationsantwort ein Erzeugen der Verkehrsdaten aufweist.

19. Verfahren (82) gemäß Anspruch 13, das weiter aufweist die Operation des Anhaltens eines Empfangs an der ersten Kommunikationsstation (14) während der ersten Zeitschlitzdauer, die in dem Empfangspausesteuersignal identifiziert wird, das erzeugt wird während der Operation des wählbaren Erzeugens des Empfangspausesteuersignals.

20. Verfahren (82) gemäß Anspruch 19, das weiter ausweist die Operation eines Sendens der Kommunikationsantwort, die während der Operation des Erzeugens der Kommunikationsantwort erzeugt wird, an eine entfernte Station.

21. Vorrichtung (38) gemäß Anspruch 1, wobei die erste Kommunikationsstation (14) ausgebildet ist, ihre Empfangsoperationen an ausgewählten Intervallen anzuhalten und, für die ausgewählte Zeitdauer an den ausgewählten Intervallen, die Kommunikationsantwort zu senden.

22. Verfahren (82) gemäß Anspruch 13, das weiter aufweist ein Anhalten der Empfangsoperationen der ersten Kommunikationsstation (14) an ausgewählten Intervallen und, für die ausgewählte Zeitdauer an den ausgewählten Intervallen, ein Senden der Kommunikationsantwort.

## Revendications

1. Appareil (38) destiné à faciliter une réponse de communication par une première station de communication (14) qui reçoit des données de communication envoyées sur des créneaux temporels (66) successifs multiples définis dans le cadre d'un mécanisme de communication sur créneaux temporels, dans lequel la communication de données vers la première station de communication (14) sur lesdits créneaux temporels est interrompue à des intervalles sélectionnés et pour une période de temps sélectionnée qui est égale à un créneau temporel ou à un groupe de créneaux temporels et dans lequel la réponse de communication comprend un accusé de réception de communication fourni par la première station de communication (14), qui accuse réception des données de communication reçues par la première station de communication (14), ledit appareil (38) comprenant :
un compteur de temps (52) conçu pour fournir une indication de l'instant où la réponse de communication doit être envoyée par la première station de communication (14), ledit compteur de temps étant synchronisé avec l'instant où ladite communication de données est interrompue sur lesdits créneaux temporels afin de synchroniser ladite indication de l'instant où la réponse de communication doit être envoyée avec l'instant où ladite communication de données est interrompue ;
un contrôleur (42) conçu pour recevoir dudit compteur de temps l'indication de l'instant où la réponse de communication doit être envoyée par la première station de communication (14), ledit contrôleur (42) étant configuré pour produire un signal de commande de pause de réception, utilisé pour interrompre le mode de fonctionnement en réception de la première station de communication (14) pendant au moins une première période sélectionnée de créneaux temporels ; et
un générateur de réponse de communication (54) configuré pour produire la réponse de communication, qui est disponible pour son envoi par la première station de communication (14) pendant au moins la première période de créneaux temporels sélectionnée, identifiée dans le signal de commande de pause de réception qui est produit par ledit contrôleur (42).

2. Appareil (38) selon la revendication 1, dans lequel ledit contrôleur (42) est en outre conçu pour recevoir une indication de l'instant où les données de communication reçues par la première station de communication (14) sont envoyées pendant plus qu'un nombre sélectionné de créneaux temporels (66) successifs et dans lequel la production du signal de commande de pause de réception répond en partie à l'indication d'envoi des données de communication pendant lesdits plus que le nombre sélectionné de créneaux temporels (66) successifs.

3. Appareil (38) selon la revendication 2, dans lequel le mécanisme de communication sur créneaux temporels définit des trames (64), chaque trame (64) étant formée d'un groupe de créneaux temporels (66), et dans lequel le nombre sélectionné de créneaux temporels (66) successifs comprend une pluralité de créneaux temporels (66) qui forment au moins une trame (64) de créneaux temporels (66).

4. Appareil (38) selon la revendication 2, dans lequel au moins la première période de créneaux temporels sélectionnée, identifiée dans le signal de commande de pause de réception, comprend au moins un créneau temporel (66) parmi les créneaux temporels successifs pendant lesquels sont envoyées les données de communication reçues par la première station de communication (14).

5. Appareil (38) selon la revendication 1, dans lequel ledit générateur de réponse de communication (54) comprend un générateur d'accusé de réception de communication.

6. Appareil (38) selon la revendication 1, dans lequel la réponse de communication comprend des données de trafic et dans lequel ledit générateur de réponse de communication (54) comprend un générateur de données de trafic.

7. Appareil (38) selon la revendication 1, dans lequel la première station de communication (14) comprend un récepteur (32) et dans lequel le signal de commande de pause de réception produit par ledit contrôleur (42) est envoyé au récepteur (32) afin d'interrompre l'opération de réception par celui-ci pendant la première période de créneaux temporels sélectionnée.

8. Appareil (38) selon la revendication 1, dans lequel la première station de communication (14) comprend un émetteur (34) et dans lequel la réponse de communication produite par ledit générateur de réponse de communication (54) est envoyée à l'émetteur (34) afin d'être émise par celui-ci.

9. Appareil (38) selon la revendication 1, dans lequel ladite au moins première période de créneaux temporels sélectionnée possède une durée assez longue afin de permettre à la première station de communication (14) de modifier son mode de fonctionnement pour permettre l'envoi de la réponse de communication, d'envoyer la réponse de communication et de revenir à son mode de fonctionnement destiné à recevoir les données de communication.

10. Appareil (38) selon la revendication 1, dans lequel la réponse de communication comprend des données de trafic, dans lequel ledit générateur de réponse de communication (54) est en outre conçu pour recevoir une indication d'un drapeau d'état, ledit générateur de réponse de communication (54) étant configuré pour produire la réponse de communication contenant les données de trafic lorsque l'indication de drapeau d'état possède une valeur sélectionnée.

11. Appareil (38) selon la revendication 1, dans lequel ledit contrôleur (42) et ledit générateur de réponse de communication fonctionnent ensemble de manière autonome.

12. Appareil (38) selon la revendication 1, dans lequel le mécanisme de communication sur créneaux temporels comprend un système de communication GSM, pour « *Global System for Mobile communication » -* Système mondial de communication mobile, qui fournit des services de données ultrarapides, dans lequel les données de communication reçues par la première station de communication (14) comprennent des données du service ultrarapide et dans lequel le signal de commande de pause de réception produit par ledit contrôleur (42) interrompt le fonctionnement de la première station de communication consistant à recevoir les données du service ultrarapide.

13. Procédé (82) destiné à faciliter une réponse de communication par une première station de communication (14) qui reçoit des données de communication envoyées sur des créneaux temporels (66) successifs multiples définis dans le cadre d'un mécanisme de communication sur créneaux temporels, dans lequel la communication de données vers la première station de communication (14) sur lesdits créneaux temporels est interrompue à des intervalles sélectionnés et pour une période de temps sélectionnée qui est égale à un créneau temporel ou à un groupe de créneaux temporels et dans lequel la réponse de communication comprend un accusé de réception de communication fourni par la première station de communication (14), qui accuse réception des données de communication reçues par la première station de communication (14), ledit procédé (82) comprenant les opérations consistant à :
fournir une indication de l'instant où la réponse de communication doit être envoyée par la première station de communication (14), l'instant où ladite communication de données doit être envoyée étant synchronisé avec l'instant où ladite communication de données est interrompue sur lesdits créneaux temporels ;
en réponse à ladite indication, produire un signal de commande de pause de réception, utilisé pour interrompre le mode de fonctionnement en réception de la première station de communication (14) pendant au moins une première période de créneaux temporels sélectionnée ; et
produire la réponse de communication, qui est disponible pour son envoi par la première station de communication (14) pendant au moins la première période de créneaux temporels sélectionnée, identifiée dans le signal de commande de pause de réception qui est produit dans ladite opération de production sélective.

14. Procédé (82) selon la revendication 13, comprenant en outre, avant l'opération de production sélective, l'opération consistant à détecter l'indication de l'instant où la réponse de communication doit être envoyée par la première station de communication (14) et dans lequel la production du signal de commande de pause de réception pendant ladite opération de génération sélective s'effectue en réponse à la détection de l'indication.

15. Procédé (82) selon la revendication 13, comprenant en outre l'opération consistant à détecter une indication de l'instant où les données de communication reçues par la première station de communication (14) sont envoyées sur plus d'un nombre sélectionné de créneaux temporels successifs et dans lequel la production du signal de commande de pause de réception pendant ladite opération de production sélective s'effectue en outre en réponse à l'indication.

16. Procédé (82) selon la revendication 15, dans lequel ledit au moins premier créneau temporel sélectionné identifié dans le signal de commande de pause de réception produit pendant ladite opération de production sélective comprend au moins un créneau temporel sur les créneaux temporels successifs pendant lesquels sont envoyées les données de communication reçues par la première station de communication (14).

17. Procédé (82) selon la revendication 13, dans lequel ladite opération de production de la réponse de communication comprend la production de l'accusé de réception de communication.

18. Procédé (82) selon la revendication 13, dans lequel la réponse de communication comprend des données de trafic et dans lequel ladite opération de production de la réponse de communication comprend la production de données de trafic.

19. Procédé (82) selon la revendication 13, comprenant en outre l'opération consistant à interrompre la réception sur la première station de communication (14) pendant la première période de créneaux temporels identifiée dans le signal de commande de pause de réception produit pendant ladite opération de production sélective du signal de commande de pause de réception.

20. Procédé (82) selon la revendication 19, comprenant en outre l'opération consistant à envoyer à une station distante la réponse de communication produite pendant ladite opération de production de la réponse de communication.

21. Appareil (38) selon la revendication 1, dans lequel la première station de communication (14) est conçue pour interrompre son fonctionnement en réception à des intervalles sélectionnés et pour envoyer la réponse de communication pendant des périodes de temps sélectionnées aux intervalles sélectionnés.

22. Procédé (82) selon la revendication 13, comprenant en outre l'interruption du fonctionnement en réception de la première station de communication (14) à des intervalles sélectionnés et, pendant des périodes de temps sélectionnées aux intervalles sélectionnés, l'émission de la réponse de communication.
